# EUROPÄISCHE PATENTSCHRIFT

(11) **EP 2 381 645 B1**
(45) Veröffentlichungstag und Bekanntmachung des Hinweises auf die Patenterteilung: **21.03.2012**
(21) Anmeldenummer: 10450067.3
(22) Anmeldetag: 26.04.2010
(51) Int. Cl.: H04L 29/08, G08C 17/00, G08C 23/00, H04L 12/24, H04W 8/24

(54) **Vorrichtung und Verfahren zur Funkprogrammierung von drahtlosen Endgeräten**
Method and device for radio-based programming of wireless terminals
Dispositif et procédé de programmation radio de terminaux sans fil

(43) Veröffentlichungstag der Anmeldung: 26.10.2011
(73) Patentinhaber: Kapsch TrafficCom AG, 1120 Wien (AT)
(72) Erfinder: Tijink, Jasja, 2380 Perchtoldsdorf (AT); Povolny, Robert, 1190 Wien (AT)
(74) Vertreter: Weiser, Andreas

(56) Entgegenhaltungen:
- EP-A1- 1 398 987
- WO-A1-2007/045937
- WO-A1-2008/056275
- US-A1- 2009 286 479

## Beschreibung

Die vorliegende Erfindung betrifft eine Vorrichtung und ein Verfahren zur Funkprogrammierung von drahtlosen Endgeräten, die eine eindeutige Funkkennung und eine optische oder akustische Signaleinrichtung haben. Insbesondere betrifft die Erfindung eine Vorrichtung und ein Verfahren zur Funkprogrammierung von Endgeräten in Form von Onboard-Units bzw. OBUs, die von Fahrzeugen im Rahmen eines drahtlosen Straßenmautsystems mitgeführt werden.

Aus den Schriften WO 2008/056275 A1 und WO 2007/045937 A1 ist es an sich bekannt, beim "Pairing" von Mobilgeräten nach dem Bluetooth-Standard das adressierte Endgerät zur Abgabe eines optischen Signalmusters aufzufordern und nur dann, wenn dieses Signalmuster vom initiierenden Mobilgerät detektiert wird, das Pairing mit dem so identifizierten Endgerät durchzuführen.

Drahtlose Endgeräte bzw. OBUs werden häufig ohne Zuordnung zu einem spezifischen Nutzer oder Einsatzgebiet hergestellt und erst bei der Ausgabe mit den spezifischen Daten initialisiert und an den Benutzer übergeben. Die Initialisierung erfolgt dabei meist direkt in der Ausgabe- bzw. Verkaufsstelle des Endgeräts, am sogenannten "Point of Sales" (POS), mittels einer speziellen Programmierstation, welche die Initialisierungs- bzw. Personalisierungsdaten in das Endgerät über die Funkschnittstelle einschreibt ("funkprogrammiert").

Auch wenn die Funkschnittstelle zwischen Programmierstation und Endgerät stets begrenzte Reichweite hat, z.B. werden hier WLAN- (wireless local area network), WAVE- (wireless access in a vehicle environment) oder DSRC- (dedicated short range communication) -Schnittstellen eingesetzt, oder sogar in einem abgeschirmten Innenraum der Programmierstation erfolgt, kann es dennoch passieren, daß am POS ein Stapel "frischer" Endgeräte zu nahe neben der Programmierstation liegt und dadurch unabsichtlich - neben dem zu programmierenden Endgerät - weitere Endgeräte "mitprogrammiert" werden, mit dem Risiko, daß dem Nutzer ein nicht programmiertes Gerät ausgehändigt wird oder ein falsch programmiertes Endgerät in Umlauf kommt.

Die Erfindung setzt sich zum Ziel, eine Vorrichtung und ein Verfahren zur Funkprogrammierung von drahtlosen Endgeräten zu schaffen, welche die Nachteile des genannten Standes der Technik überwinden.

Dieses Ziel wird in einem ersten Aspekt de Erfindung mit einer Vorrichtung mit den Merkmalen des Anspruchs 1 erreicht.

Die Erfindung zieht die bei den meisten drahtlosen Endgeräten vorhandene optische oder akustische Signaleinrichtung, z.B. eine Status-LED oder einen Beeper, zur Validierung des Endgeräts, welches funkprogrammiert wird, heran. Dadurch kann eine unbeabsichtigte Mitprogrammierung von sich in Funkreichweite der Programmierstation befindlichen anderen Endgeräten sicher verhindert werden.

In einer ersten bevorzugten Ausführungsform der Erfindung mit zumindest einem optischen Signaldetektor liegt dieser in einer umgebungslichtgeschützten Aufnahmeeinrichtung für ein Endgerät. In einer alternativen bevorzugter Ausführungsform mit zumindest einem akustischen Signaldetektor liegt dieser in einer umgebungsschallgeschützten Aufnahmeeinrichtung für ein Endgerät. Dadurch kann die Sicherheit der Zuordnung zwischen Programmierstation und zu programmierendem Endgerät noch weiter erhöht werden. Störungen durch in Sicht- oder Schallreichweite befindliche andere Endgeräte können damit sicher vermieden werden.

Bevorzugt ist die genannte Aufnahmeeinrichtung ein Innenraum der Vorrichtung, auf den sowohl der Sendeempfänger als auch der Signaldetektor gerichtet sind. Damit kann jener Innenraum der Vorrichtung mitverwendet werden, welcher in an sich bekannter Weise zur abgeschirmten Funkprogrammierung dient.

Besonders günstig ist es, wenn der Signaldetektor die Signalform und/oder -frequenz des optischen bzw. akustischen Signal detektiert, wodurch die Signale des Endgeräts besser von störendem Umgebungslärm oder Umgebungslicht unterschieden werden können.

Im einfachsten Fall können - je nachdem, mit welcher Art von Signaleinrichtung die Endgeräte ausgestattet sind - nur ein optischer oder nur ein akustischer Signaldetektor vorgesehen werden und die Steuereinrichtung begnügt sich mit nur einem optischen oder akustischen Antwortsignal als Voraussetzung für die Funkprogrammierung. Im Falle von Endgeräten, die beide Arten von Signaleinrichtungen haben, können zur Erhöhung der Störungssicherheit bevorzugt sowohl ein optischer als auch ein akustischer Signaldetektor vorgesehen sein werden die Steuereinrichtung ist dafür ausgebildet, über den Sendeempfänger eine Aufforderung zur Abgabe eines optischen und eines akustischen Signals an ein Endgerät vorgegebener Funkkennung zu senden und nur dann, wenn die Signaldetektoren daraufhin ein optisches und ein akustisches Signal detektieren, dieses Endgerät funkzuprogrammieren.

Bevorzugt ist die genannte Funkkennung eine eindeutige Gerätekennung oder MAC-Adresse des Endgeräts, insbesondere wenn dieses Teil eines WLAN- oder WAVE-Netzes ist.

In einem zweiten Aspekt schafft die Erfindung ein Verfahren zur Funkprogrammierung von drahtlosen Endgeräten mit den Merkmalen des Anspruchs 8.

In einer ersten vorteilhaften Variante des Verfahrens wird dazu das funkzuprogrammierende Endgerät in eine umgebungslichtgeschützte Aufnahmeeinrichtung der Programmierstation eingebracht; in einer zweiten vorteilhaften Variante wird das funkzuprogrammierende Endgerät dazu in eine umgebungsschallgeschützte Aufnahmeeinrichtung der Programmierstation eingebracht. Bevorzugt wird als Aufnahmeeinrichtung jener Innenraum der Programmierstation verwendet, in dem auch die Funkprogrammierung erfolgt.

Bevorzugt wird in Schritt b) die Signalform und/oder -frequenz des optischen bzw. akustischen Signal ausgewertet wird und nur dann, wenn diese vorgegebenen Kriterien entspricht, das Endgerät funkprogrammiert. Damit können die Signale des Endgeräts besser von störendem Umgebungslärm oder Umgebungslicht unterschieden werden.

Wie erörtert ist es zur weiteren Erhöhung der Störungssicherheit besonders günstig, wenn die Funkprogrammierstation in Schritt a) eine Aufforderung zur Abgabe sowohl eines optischen als auch eines akustischen Signals sendet und in Schritt b) nur dann, wenn sie daraufhin sowohl ein optisches als auch ein akustisches Signal empfängt, das Endgerät funkprogrammiert.

Gemäß einer weiteren vorteilhaften Ausführungsform der Erfindung kann die Funkprogrammierstation zunächst die Funkkennungen aller von ihr erreichbaren Endgeräte über Funk abfragen und anschließend die Schritte a) und b) für jedes einzelne der erreichbaren Endgeräte ausführen.

Zweckmäßigerweise wird dieses Verfahren abgebrochen, sobald das erste Endgerät funkprogrammiert ist, weil in der Regel nur eines der Endgeräte programmiert werden soll und dazu auch in optische bzw. akustische Nähe zum Signaldetektor der Programmierstation gebracht wird; es erübrigt sich daher, nach Auffinden des ersten antwortenden Endgeräts noch weitere Endgeräte auf optische bzw. akustische Antwort zu überprüfen.

Wird anderseits durch mögliche Störungen überhaupt kein entsprechend optisch oder akustisch antwortendes Endgerät detektiert, können die Schritte a) und b) mit anderen Funkparametern, z.B. anderen Funkfrequenzen oder -protokollen, wiederholt werden.

Die Erfindung wird nachstehend anhand von in den beigeschlossenen Zeichnungen dargestellten Ausführungsbeispielen näher erläutert. In den Zeichnungen zeigt:
Fig. 1 ein Blockschaltbild einer ersten Ausführungsform der Vorrichtung der Erfindung und
Fig. 2 ein Blockschaltbild einer zweiten Ausführungsform der Vorrichtung der Erfindung.

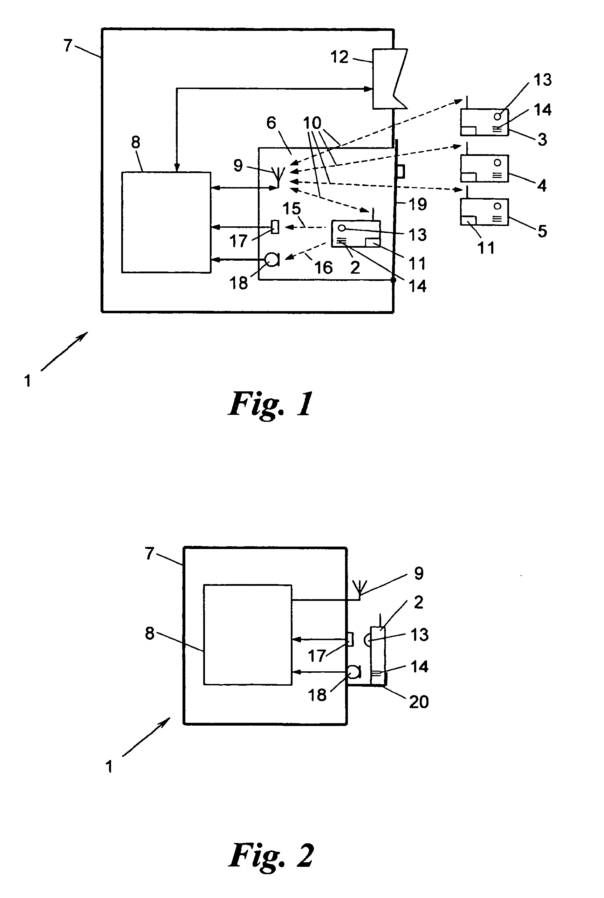

Fig. 1 zeigt eine Vorrichtung bzw. Programmierstation 1 zur Funkprogrammierung von drahtlosen Endgeräten 2 - 5, insbesondere OBUs eines Straßenmautsystems. Ein jeweils zu programmierendes Endgerät, hier das Endgerät 2, ist dazu in einer Aufnahmeeinrichtung, in Fig. 1 in einem Innenraum 6 eines Gehäuses 7 der Vorrichtung 1, für die Dauer des Programmiervorganges aufgenommen. Die übrigen Endgeräte 3 - 5 sind z.B. als Stapel "frischer" Endgeräte in der Nähe der Vorrichtung 1 bevorratet.

Die Programmierstation 1 umfaßt eine Steuereinrichtung 8 mit einem daran angeschlossenen Sendeempfänger 9 zur Funkkommunikation über eine Funkschnittstelle 10 mit den Endgeräten 2 - 5. Über die Funkschnittstelle 10 kann potentiell jedes Endgerät 2 - 5 angesprochen (adressiert) und funkprogrammiert werden. Bei dieser Funkprogrammierung werden beispielsweise benutzeroder anwendungsspezifische Daten in das Endgerät 2 - 5 eingeschrieben, z.B. eine Benutzeridentifikation, Kontonummer, Fahrzeugidentifikation usw.

Zur individuellen Adressierung ist jedes Endgerät 2 - 5 mit einer eindeutigen Funkkennung 11 ausgestattet, z.B. einer eindeutigen Gerätekennung (OBU-ID), einer MAC-Adresse, wenn die Funkschnittstelle z.B. eine WLAN- oder WAVE-Schnittstelle ist, od.dgl.

Die Funkkennungen 11 der sich in Funkreichweite des Sendeempfängers 9 befindlichen Endgeräte 2 - 5 sind der Programmierstation 1, genauer ihrer Steuereinrichtung 8, zunächst nicht bekannt. Die Funkkennung 11 des zu programmierenden Endgeräts 2 muß daher entweder über eine (optionale) Eingabeeinrichtung 12 vorgegeben werden, oder es werden die Funkkennungen 11 aller erreichbaren Endgeräte 2 - 5 zunächst über die Funkschnittstelle 10 abgefragt. Bei Selbsteingabe ist nicht gewährleistet, ob die eingegebene Funkkennung 11 tatsächlich jenes Eingabegerät 2 identifiziert, das sich in der Aufnahmeeinrichtung 6 befindet; bei Rundabfrage ist überhaupt keine Zuordnung zwischen den abgefragten Funkkennungen 11 und dem nun tatsächlich zu programmierenden Endgerät vorhanden. Um daher in jedem Fall eine eindeutige Identifizierung des funkzuprogrammierenden Endgeräts 2 gegenüber der Programmierstation 1 zu gewährleisten, werden die folgende Vorrichtung und das folgende Verfahren vorgesehen.

Die Vorrichtung und das Verfahren benützen den Umstand, daß drahtlose Endgeräte 2 - 5 in der Regel mit einer optischen und/oder akustischen Signaleinrichtung 13, 14 ausgestattet sind, beispielsweise einer Leuchtdiode (LED) oder beleuchteten LCD-Anzeige 13 und/oder einem Lautsprecher oder Beeper 14, welche über die Funkschnittstelle 10 zur Abgabe eines optischen bzw. akustischen Signals 15, 16 veranlaßt werden können.

Die Programmierstation 1 ist nun mit einem entsprechenden optischen Signaldetektor 17, z.B. einer Fotozelle, und/oder akustischen Signaldetektor 18, z.B. einem Mikrofon, ausgestattet. Der bzw. die Signaldetektoren 17, 18 sind an die Steuereinrichtung 8 angeschlossen. Jeder Signaldetektor 17, 18 kann dabei auch durch mehrere einzelne, zusammenarbeitende Detektionskomponenten realisiert sein, z.B. mehrere verteilte Fotozellen, mehrere verteilte Mikrophone usw.

Die Steuereinrichtung 8 ist so programmiert, daß sie - bevor sie eine Funkprogrammierung an einem Endgerät 2 - 5 durchführt - das jeweilige zu programmierende Endgerät (hier das Endgerät 2) unter seiner Funkkennung 11 anspricht und zur Abgabe eines optischen und/oder akustischen Signals 15, 16 auffordert. Anschließend wartet die Steuereinrichtung 8 auf die Detektion eines solchen optischen und/oder akustischen Signals durch den bzw. die Signaldetektor(en) 17, 18; nur dann, wenn ein solches optisches und/oder akustisches Signal 15, 16 detektiert wird, nimmt die Steuereinrichtung 8 die Funkprogrammierung des jeweiligen Endgeräts 2 über den Sendeempfänger 9 und die Funkschnittstelle 10 vor.

Vorab kann die Steuereinrichtung 8 über den Sendeempfänger 9 auch eine Information über die Art - z.B. optisch, akustisch, optisch und akustisch, Form (z.B. Impulsform) und/oder Frequenz usw. - der von einem Endgerät 2 abgebbaren Signale 15, 16 von diesem einholen und daraufhin die Aufforderung in Abhängigkeit der erhaltenen Information entsprechend gestalten, d.h. zur Abgabe desjenigen Signals 15, 16 auffordern, das das Endgerät 2 in der Lage ist abzugeben, und die Signaldetektoren 17, 18 auch entsprechend auf das zu erwartende Signal einstellen.

Im einfachsten Fall - je nachdem, mit welcher Art von Signaleinrichtung 13, 14 die Endgeräte 2 - 5 ausgestattet sind - ist nur der optische Signaldetektor 17 oder der akustische Signaldetektor 18 vorgesehen und die Steuereinrichtung 8 begnügt sich mit nur einem optischen Antwortsignal 15 oder nur einem akustischen Antwortsignal 16 als Voraussetzung für die Funkprogrammierung. Im Falle von Endgeräten 2 - 5, die beide Arten von Signaleinrichtungen 13, 14 haben, können zur Erhöhung der Störungssicherheit sowohl der optische Signaldetektor 17 als auch der akustische Signaldetektor 18 vorgesehen werden und die Steuereinrichtung 8 nimmt die Funkprogrammierung nur vor, wenn sowohl das optische Antwortsignal 15 als auch das akustische Antwortsignal 16 eingelangt sind.

Bevorzugt werden die Signaldetektoren 17, 18 gegenüber dem zu programmierenden Endgerät 2 so positioniert, daß sie möglichst wenig Umgebungslicht bzw. Umgebungsschall empfangen, d.h. möglichst nur das optische bzw. akustische Signal jenes Endgeräts 2 empfangen, das in der Nähe oder in oder an der Programmierstation 1 liegt. Wenn ein Innenraum 6 des Gehäuses 7 als Aufnahmeeinrichtung für das Endgerät 2 verwendet wird, werden die Signaldetektoren 17, 18 dazu direkt im Innenraum 6 angeordnet, zusammen mit dem Sendeempfänger 9 zur Funkprogrammierung.

Der Innenraum 6 kann nicht nur licht- und schallabgeschirmt sondern auch funkwellenabgeschirmt sein, beispielsweise durch eine verschließbare Klappe 19 des Gehäuses 7, sodaß die Funkwellen des Sendeempfängers 9 möglichst wenig nach außen dringen, um möglichst wenige umliegende Endgeräte 3 - 5 zu erreichen.

Wenn bei der genannten Rundabfrage der in Funkreichweite befindlichen Endgeräte mehrere solche Endgeräte 2 - 5 aufgefunden werden, geht die Steuereinrichtung 8 alle aufgefundenen Funkkennungen 11 einzeln durch und fordert nacheinander jedes Endgerät 2 - 5 zur Abgabe eines akustischen und/oder optischen Signals auf; sobald das erste optische und/oder akustische Signal 15, 16 von den Signaldetektoren 17, 18 aufgefangen wird, ist das zu programmierende Endgerät 2 gefunden und die Funkprogrammierung desselben wird durchführt; die übrigen aufgefundenen Endgeräte 3 - 5 brauchen nicht mehr weiter überprüft werden.

Fig. 2 zeigt eine alternative Ausführungsform der Programmierstation 1, bei welcher die Aufnahmeeinrichtung für das Endgerät 2 eine an der Außenseite des Gehäuses 7 montierte Halterung 20 ist, in welche das Endgerät 2 derart einsteckbar ist, daß seine Signaleinrichtung(en) 13, 14 zu dem/den entsprechenden Signaldetektor(en) 17, 18 weisen. Die Signaldetektoren 17, 18 werden so einfach durch das unmittelbar davor liegende Endgerät 2 umgebungslicht- bzw. umgebungsschallgeschützt.

Zusammengefaßt führt die Programmierstation 1 der Fig. 1 und 2 folgendes Verfahren aus:
a) Zunächst wird eine Aufforderung zur Abgabe eines optischen oder akustischen Signals 15, 16 von der Programmierstation 1 an ein zu programmierendes Endgerät 2 vorgegebener Funkkennung 11 gesandt, und
b) nur dann, wenn der bzw. die Signaldetektoren 17, 18 der Programmierstation 1 daraufhin ein solches optisches und/oder akustisches Signal 15, 16 empfangen, wird dieses Endgerät 2 über den Sendeempfänger 9 und die Funkschnittstelle 10 funkprogrammiert.

Die Erfindung ist nicht auf die dargestellten Ausführungsformen beschränkt, sondern umfaßt alle Varianten und Modifikationen, die in den Rahmen der angeschlossenen Ansprüche fallen.

## Patentansprüche

1. Vorrichtung (1) zur Funkprogrammierung von drahtlosen Endgeräten (2 - 5), die eine eindeutige Funkkennung (11) und eine optische oder akustische Signaleinrichtung (13, 14) haben, mit einem Sendeempfänger (9) zur Funkkommunikation (10) mit den Endgeräten (2 - 5) und einer an den Sendeempfänger (9) angeschlossenen Steuereinrichtung (8), welche dafür ausgebildet ist, ein Endgerät (2) vorgegebener Funkkennung (11) über den Funksendeempfänger (9) funkzuprogrammieren, wobei die Steuereinrichtung (8) mit zumindest einem optischen oder akustischen Signaldetektor (17, 18) verbunden und dafür ausgebildet ist, über den Sendeempfänger (9) eine Aufforderung zur Abgabe eines optischen oder akustischen Signals (15, 16) an ein Endgerät (2) vorgegebener Funkkennung (11) zu senden und nur dann, wenn der Signaldetektor (17, 18) daraufhin ein optisches oder akustisches Signal (15, 16) detektiert, dieses Endgerät (2) funkzuprogrammieren, **dadurch gekennzeichnet, daß** die Steuereinrichtung (8) über den Sendeempfänger (9) eine Information über die Art der von einem Endgerät (2) vorgegebener Funkkennung (11) abgebbaren Signale (15, 16) einholt und daraufhin eine von dieser Information abhängige Aufforderung zur Abgabe des entsprechenden optischen und/oder akustischen Signals (15, 16) an das Endgerät (2) sendet.

2. Vorrichtung nach Anspruch 1 mit zumindest einem optischen Signaldetektor, **dadurch gekennzeichnet, daß** der optische Signaldetektor (17) in einer umgebungslichtgeschützten Aufnahmeeinrichtung (6, 20) für ein Endgerät (2) liegt.

3. Vorrichtung nach Anspruch 1 mit zumindest einem akustischen Signaldetektor, **dadurch gekennzeichnet, daß** der akustische Signaldetektor (18) in einer umgebungsschallgeschützten Aufnahmeeinrichtung (6, 20) für ein Endgerät (2) liegt.

4. Vorrichtung nach Anspruch 2 oder 3, **dadurch gekennzeichnet, daß** die Aufnahmeeinrichtung ein Innenraum (6) der Vorrichtung (1) ist, auf den sowohl der Sendeempfänger (9) als auch der Signaldetektor (17, 18) gerichtet sind.

5. Vorrichtung nach einem der Ansprüche 1 bis 4, **dadurch gekennzeichnet, daß** der Signaldetektor (17, 18) die Signalform und/oder -frequenz des optischen bzw. akustischen Signal (15, 16) detektiert.

6. Vorrichtung nach einem der Ansprüche 1 bis 5, **dadurch gekennzeichnet, daß** sowohl ein optischer als auch ein akustischer Signaldetektor (17, 18) vorgesehen sind und die Steuereinrichtung (8) dafür ausgebildet ist, über den Sendeempfänger (9) eine Aufforderung zur Abgabe eines optischen und eines akustischen Signals (15, 16) an ein Endgerät (2) vorgegebener Funkkennung (11) zu senden und nur dann, wenn die Signaldetektoren (17, 18) daraufhin ein optisches und ein akustisches Signal (15, 16) detektieren, dieses Endgerät (2) funkzuprogrammieren.

7. Vorrichtung nach einem der Ansprüche 1 bis 6, **dadurch gekennzeichnet, daß** die genannte Funkkennung (11) eine eindeutige Gerätekennung oder MAC-Adresse des Endgeräts (2 - 5) ist.

8. Verfahren zur Funkprogrammierung von drahtlosen Endgeräten (2 - 5), die eine eindeutige Funkkennung (11) haben und ein optisches oder akustisches Signal (15, 16) abgeben können, von einer Funkprogrammiersstation (1) aus, wobei die Funkprogrammierstation (1)
a) eine Aufforderung zur Abgabe zumindest eines optischen oder akustischen Signals (15, 16) an ein Endgerät (2) vorgegebener Funkkennung (11) sendet und
b) nur dann, wenn sie daraufhin zumindest ein optisches oder akustisches Signal (15, 16) empfängt, dieses Endgerät (2) funkprogrammiert,
**dadurch gekennzeichnet, daß** die Funkprogrammierstation (1) zuvor eine Information über die Art der von einem Endgerät (2) vorgegebener Funkkennung (11) abgebbaren Signale (15, 16) einholt und daraufhin im Schritt a) eine von dieser Information abhängige Aufforderung zur Abgabe des entsprechenden optischen und/oder akustischen Signals (15, 16) an das Endgerät (2) sendet.

9. Verfahren nach Anspruch 8, **dadurch gekennzeichnet, daß** das funkzuprogrammierende Endgerät (2) dazu in eine umgebungslichtgeschützte Aufnahmeeinrichtung (6, 20) der Funkprogrammierstation (1) eingebracht wird.

10. Verfahren nach Anspruch 8, **dadurch gekennzeichnet, daß** das funkzuprogrammierende Endgerät (2) dazu in eine umgebungsschallgeschützte Aufnahmeeinrichtung (6, 20) der Funkprogrammierstation (1) eingebracht wird.

11. Verfahren nach Anspruch 9 oder 10, **dadurch gekennzeichnet, daß** als Aufnahmeeinrichtung ein Innenraum (6) der Funkprogrammierstation (1) verwendet wird, in dem auch die Funkprogrammierung (10) erfolgt.

12. Verfahren nach einem der Ansprüche 8 bis 11, **dadurch gekennzeichnet, daß** in Schritt b) die Signalform und/oder -frequenz des optischen bzw. akustischen Signal (15, 16) ausgewertet wird und nur dann, wenn diese vorgegebenen Kriterien entspricht, das Endgerät (2) funkprogrammiert wird.

13. Verfahren nach einem der Ansprüche 8 bis 12, **dadurch gekennzeichnet, daß** die Funkprogrammierstation in Schritt a) eine Aufforderung zur Abgabe eines optischen und eines akustischen Signals (15, 16) an ein Endgerät (2) vorgegebener Funkkennung (11) sendet und in Schritt b) nur dann, wenn sie daraufhin ein optisches und ein akustisches Signal (15, 16) empfängt, dieses Endgerät (2) funkprogrammiert.

14. Verfahren nach einem der Ansprüche 8 bis 13, **dadurch gekennzeichnet, daß** die Funkprogrammierstation (1) zunächst die Funkkennungen (11) aller von ihr erreichbaren Endgeräte (2 - 5) über Funk abfragt (10) und anschließend die Schritte a) und b) für jedes einzelne der erreichbaren Endgeräte (2 - 5) ausführt.

## Claims

1. Device (1) for radio programming wireless terminal devices (2-5), which have a unique radio identification (11) and an optical or acoustic signal device (13, 14), comprising a transceiver (9) for radio communication (10) with the terminal devices (2-5) and a control device (8) connected to the transceiver (9), which is configured for radio programming a terminal device (2) with a predetermined radio identification (11) via the radio transceiver (9), wherein the control device (8) is connected to at least one optical or acoustic signal detector (17, 18) and is configured for transmitting a request for emission of an optical or acoustic signal (15, 16) to a terminal device (2) with a predetermined radio identification (11) via the transceiver (9) and then radio programming this terminal device (2) only when the signal detector (15, 16) detects an optical or acoustic signal (15, 16), **characterised in that** the control device (8) acquires information concerning the type of signals (15, 16) which can be emitted by a terminal device (2) with a predetermined radio identification (11) via the transceiver (9) and then transmits a request dependent on this information for emission of the corresponding optical and/or acoustic signal (15, 16) to the terminal device (2).

2. Device according to claim 1 with at least one optical signal detector, **characterised in that** the optical signal detector (17) lies in a receiving arrangement (6, 20) for a terminal device (2) protected against ambient light.

3. Device according to claim 1 with at least one acoustic signal detector, **characterised in that** the acoustic signal detector (18) lies in a receiving arrangement (6, 20) for a terminal device (2) protected against ambient noise.

4. Device according to claim 2 or 3, **characterised in that** the receiving arrangement is an internal space (6) of the device (1), towards which both the transceiver (9) and the signal detector (17, 18) are directed.

5. Device according to one of claims 1 to 4, **characterised in that** the signal detector (17, 18) detects the signal form and/or frequency of the optical or acoustic signal (15, 16).

6. Device according to one of claims 1 to 5, **characterised in that** both an optical and an acoustic signal detector (17, 18) are provided and the control device (8) is configured for transmitting a request for emission of an optical and an acoustic signal (15, 16) to a terminal device (2) with a predetermined radio identification (11) via the transceiver (9) and then radio programming this terminal device (2) only when the signal detectors (17, 18) detect an optical and an acoustic signal (15, 16).

7. Device according to one of claims 1 to 6, **characterised in that** the said radio identification (11) is a unique device identification or MAC address of the terminal device (2-5).

8. Method for radio programming wireless terminal devices (2-5), which have a unique radio identification (11) and can emit an optical or acoustic signal (15, 16), by a radio programming station (1), wherein the radio programming station (1)
a) transmits a request for emission at least of an optical or acoustic signal (15, 16) to a terminal device (2) with a predetermined radio identification (11) and
b) then radio programs this terminal device (2) only when it receives at least one optical or acoustic signal (15, 16),
**characterised in that** the radio programming station (1) acquires information concerning the type of signals (15, 16) which can be emitted by a terminal device (2) with a predetermined radio identification (11) beforehand and then in step a) transmits a request dependent on this information for emission of the corresponding optical and/or acoustic signal (15, 16) to the terminal device (2).

9. Method according to claim 8, **characterised in that** the terminal device (2) to be radio programmed is inserted for this purpose into a receiving arrangement (6, 20) of the radio programming station (1) protected against ambient light.

10. Method according to claim 8, **characterised in that** the terminal device (2) to be radio programmed is inserted for this purpose into a receiving arrangement (6, 20) of the radio programming station (1) protected against ambient noise.

11. Method according to claim 9 or 10, **characterised in that** an internal space (6) of the radio programming station (1) is used as receiving arrangement, in which the radio programming (10) is also conducted.

12. Method according to one of claims 8 to 11, **characterised in that** in step b) the signal form and/or frequency of the optical or acoustic signal (15, 16) is evaluated and the terminal device (2) is radio programmed only when this corresponds to predetermined criteria.

13. Method according to one of claims 8 to 12, **characterised in that** in step a) the radio programming station transmits a request for emission of an optical and an acoustic signal (15, 16) to a terminal device (2) with a predetermined radio identification (11) and in step b) then radio programs this terminal device (2) only when it receives an optical and an acoustic signal (15, 16).

14. Method according to one of claims 8 to 13, **characterised in that** the radio programming station (1) firstly scans by radio (10) the radio identifications (11) of all terminal devices (2-5) reachable by it and then performs steps a) and b) for each one of the reachable terminal devices (2-5).

## Revendications

1. Dispositif (1) de programmation par radio de terminaux sans fil (2 - 5), qui possèdent une identification radio univoque (11) et un système d'émission de signal optique ou acoustique (13, 14), équipé d'un émetteur-récepteur (9) destiné à la radiocommunication (10) avec les terminaux (2 - 5) et d'un système de commande (8) raccordé à l'émetteur-récepteur (9), lequel dispositif est conçu pour programmer par radio un terminal (2) ayant une identification radio prédéfinie (11) par le biais de l'émetteur-récepteur radioélectrique (9), le système de commande (8) étant relié à au moins un détecteur de signal optique ou acoustique (17, 18) et conçu pour qu'il envoie par le biais de l'émetteur-récepteur (9) une demande d'émission d'un signal optique ou acoustique (15, 16) à un terminal (2) ayant une identification radio prédéfinie (11) et pour que, seulement ensuite lorsque le détecteur de signal (17, 18) détecte après cela un signal optique ou acoustique (15, 16), il programme par radio ce terminal (2), **caractérisé en ce que** le système de commande (8) récupère par le biais de l'émetteur-récepteur (9) une information sur le type des signaux (15, 16), qui peuvent être émis par un terminal (2) ayant une identification radio prédéfinie (11), et envoie après cela au terminal (2) une demande, dépendante de cette information, d'émission du signal (15, 16) optique et/ou acoustique correspondant.

2. Dispositif selon la revendication 1 ayant au moins un détecteur de signal optique, **caractérisé en ce que** le détecteur de signal optique (17) est situé dans un dispositif de logement (6, 20) protégé contre la lumière environnante et prévu pour un terminal (2).

3. Dispositif selon la revendication 1 ayant au moins un détecteur de signal acoustique, **caractérisé en ce que** le détecteur de signal acoustique (18) est situé dans un dispositif de logement (6, 20) protégé contre le bruit environnant et prévu pour un terminal (2).

4. Dispositif selon la revendication 2 ou 3, **caractérisé en ce que** le dispositif de logement est un espace interne (6) du dispositif (1) vers lequel sont dirigés aussi bien l'émetteur-récepteur (9) que le détecteur de signal (17, 18).

5. Dispositif selon l'une quelconque des revendications 1 à 4, **caractérisé en ce que** le détecteur de signal (17, 18) détecte la forme et/ou la fréquence du signal optique respectivement acoustique (15, 16).

6. Dispositif selon l'une quelconque des revendications 1 à 5, **caractérisé en ce qu'**aussi bien un détecteur de signal optique qu'un détecteur de signal acoustique (17, 18) sont prévus et que le système de commande (8) est conçu pour qu'il envoie par le biais de l'émetteur-récepteur (9) une demande d'émission d'un signal optique et d'un signal acoustique (15, 16) à un terminal (2) ayant une identification radio prédéfinie (11) et pour que, seulement ensuite lorsque les détecteurs de signaux (17, 18) détectent après cela un signal optique et un signal acoustique (15, 16), il programme par radio ce terminal (2).

7. Dispositif selon l'une quelconque des revendications 1 à 6, **caractérisé en ce que** ladite identification radio (11) est une identification d'appareil univoque ou une adresse MAC du terminal (2 - 5).

8. Procédé de programmation par radio de terminaux sans fil (2 - 5), qui possèdent une identification radio univoque (11) et peuvent émettre un signal optique ou acoustique (15, 16), depuis une station de programmation par radio (1), selon lequel la station de programmation par radio (1)
a) envoie une demande d'émission d'au moins un signal optique ou acoustique (15, 16) à un terminal (2) ayant une identification radio prédéfinie (11) et
b) seulement ensuite, lorsqu'elle reçoit après cela au moins un signal optique ou acoustique (15, 16), programme par radio ce terminal (2),
**caractérisé en ce que** la station de programmation par radio (1) récupère auparavant une information sur le type des signaux (15, 16), qui peuvent être émis par un terminal (2) ayant une identification radio prédéfinie (11), et, après cela à l'étape a), envoie au terminal (2) une demande, dépendante de cette information, d'émission du signal optique et/ou acoustique correspondant (15, 16).

9. Procédé selon la revendication 8, **caractérisé en ce que** le terminal (2) à programmer par radio est installé à cet effet dans un dispositif de logement protégé contre la lumière ambiante (6, 20) de la station de programmation par radio (1).

10. Procédé selon la revendication 8, **caractérisé en ce que** le terminal (2) à programmer par radio est installé à cet effet dans un dispositif de logement protégé contre le bruit ambiant (6, 20) de la station de programmation par radio (1).

11. Procédé selon la revendication 9 ou 10, **caractérisé en ce que** le dispositif de logement employé est un espace interne (6) de la station de programmation par radio (1) dans lequel a lieu également la programmation par radio (10).

12. Procédé selon l'une quelconque des revendications 8 à 11, **caractérisé en ce que**, à l'étape b) la forme et/ou la fréquence du signal optique respectivement acoustique (15, 16) est évaluée et, seulement ensuite, lorsque celle-ci correspond à des critères prédéfinis, le terminal (2) est programmé par radio.

13. Procédé selon l'une quelconque des revendications 8 à 12, **caractérisé en ce que** la station de programmation par radio, à l'étape a) envoie à un terminal (2) ayant une identification radio prédéfinie (11) une demande pour émettre un signal optique et un signal acoustique (15, 16) et, à l'étape b) seulement ensuite, lorsqu'elle reçoit après cela un signal optique et un signal acoustique (15, 16), programme par radio ce terminal (2).

14. Procédé selon l'une quelconque des revendications 8 à 13, **caractérisé en ce que** la station de programmation par radio (1) interroge (10) d'abord par radio les identifications radio (11) de tous les terminaux (2 - 5) dans sa portée et que, ensuite, elle exécute les étapes a) et b) pour chacun des terminaux (2 - 5) dans sa portée.
